# EUROPEAN PATENT APPLICATION

(11) **EP 2 280 187 A1**
(43) Date of publication of application: **02.02.2011**
(21) Application number: 09166643.8
(22) Date of filing: 28.07.2009
(51) Int. Cl.: F16G 13/06, F16H 7/06

(54) **Chain and chain transmission**

(71) Applicant: Korse, Theodorus Henricus Johannes Carolina, 2724 CJ Zoetermeer (NL)
(72) Inventor: Korse, Theodorus Henricus Johannes Carolina, 2724 CJ Zoetermeer (NL)
(74) Representative: Uittenbogaart, Gustaaf Adolf

(57) **Abstract**

The invention concerns a chain (1) comprising linkplates (L,L₀,L₁,L₂,L₃) having two hinge pins with hinge rotation axes (A,B,C,D,H,32) for coupling to following or preceeding inner linkplates or outer linkplates, the successive linkplates can rotate around successive hinge rotation axes, wherein when the centre lines of successive linkplates form a common centreline, the most forward linkplate makes a first angle (α₁) with the common centreline (s) and a first following linkplate makes a second angle (α₂) with the common centreline (3).
In accordance with the invention each linkplate has a front cam (18) and a rear cam (15) and when the first angle increases by rotating the most forward linkplate, the rear cam of the most forward linkplate and the front cam of a second following linkplate starts to interact before the first angle increases to the pitch angle and this interaction forces the second angle to increase above 0.

## Description

The invention concerns a chain in accordance with the preamble of claim 1. Such chains are generally known as bush or roller chains, as there are often rollers or bushes around the hinge pins. In the least complicated form, these chains have two inner linkplates and two outer linkplates one after the other; these linkplates form inner and outer links of a simplex chain. If there are for each link of the chain more than two linkplates side by side, these chains are known as duplex or triplex chains.

The disadvantage of these chains is that when there are no supports or guides for the linkplates and/or the bushes or rollers around the hinge pins that approach a sprocket, the bushes or rollers collide on the sprocket.

In the tensioned part of the chain approaching the sprocket, the hinge centres of the unsupported part of the chain form a straight line from the last supported hinge pin that is on the pitch circle of the sprocket. This straight line intersects the pitch circle of the sprocket. When looped around a rotating sprocket the more or less translational movement of the chain causes the hinge centre of the next bush or roller to approach the pitch circle of the sprocket and after the hinge centre of the next bush or roller has reached the pitch circle, the hinge centre gets a fixed position on the sprocket and starts rotating with the sprocket.

At the rotative position of the sprocket wherein the hinge centre reaches the pitch circle of the sprocket, there is a collision/impact between the roller or bush around the hinge centre and the sprocket. The rotation of the sprocket and the translational movement of the chain give the hinge centre a relative speed directed towards the centre of the sprocket. The bearings of the sprocket pass the impact force and the vibrations caused by the repeated collisions/impacts on into the frame in which they are mounted. This causes noise and vibration in the surroundings of the chain, which is a disadvantage.

In order to overcome this disadvantage the chain is according to the characterizing part of claim 1. In this way, when the chain links that are approaching the sprocket are in a straight line and the most forward linkplate has both hinge centres on the pitch circle of the sprocket with the most forward linkplate making a first angle of more than half the pitch angle with the straight line, the first following linkplate is forced to make a second angle with the straight line and to push the rear rotation axis of the first following linkplate line, that is the most forward unsupported hinge centre, away from intersecting the pitch circle.

This means that after following the path between two sprockets, the most forward linkplate, which is the linkplate that has both hinge centres located on the pitch circle and which is nearest to the unsupported approaching linkplates, pushes the next hinge pin, which couples the first following linkplate and the second following linkplate, away from the pitch circle. The roller or bush around the next hinge pin does not impact/collide on the sprocket but is guided by the most forward linkplate to the pitch circle and settles on the sprocket with the hinge centre in or near the tangent point. The first contact between the rear cam and the front cam might cause the most forward linkplate to move relative to the sprocket where after it resettles on the sprocket under influence of the force in the chain. This first contact does not lead to vibrations in the sprocket and as there is no impact on the sprocket the noise and vibration levels are considerably reduced.

In an embodiment of the invention, the chain is according to claim 2. In this way, the lifting of the second following linkplate before the first angle increases to 0.8 times the pitch angle limits the downward vertical movements of the hinge centres approaching a sprocket and this reduces the vertical oscillations in a chain approaching the sprocket.

In an embodiment of the invention, the chain is according to claim 3. In this way, the most forward linkplate lifts the rear hinge centre of the first following linkplate further so that it is nearer the tangent of the sprocket and this reduces the vertical movements of the hinge centres approaching the sprocket further.

In an embodiment of the invention, the chain is according to claim 4. In this way, each hinge centre approaching the sprocket approximately follows a straight line that is tangent to the pitch circle of the sprocket and moves onto the pitch circle at the tangent point. This results in a chain that acts in a tangent line with a constant distance to the centre of the sprocket and so reduces variations in chain force and/or torque of the sprocket.

In an embodiment of the invention, the chain is according to claim 5. In this way, the most forward linkplate supports the second following linkplate in a direction that makes a larger angle with the centre line of the first following linkplate so that less force is needed to secure the rotative position of the first following linkplate. Also the cam radius, which increases with an increasing of the angle between the preceding and following linkplates, is relative large. The result is that the contact force between the cams is low and hardly increases the forces in the linkplates and hinges. Also the Hertz contact stress on the cams is low, so that there is no wear.

In an embodiment of the invention, the chain is according to claim 6. In this way, it is easier to make a dimensional check on the shape of the linkplate. Also the linkplates are easier to produce with a high accuracy.

In an embodiment of the invention, the chain is according to claim 7. In this way, the play prevents touching of the cams which might occur due to fabrication tolerances. Unwanted touching of the cams may cause high compression forces between the cams. These high compression forces result in increased bearing forces of the hinge pin, which might lead to wear and must be avoided.

In an embodiment of the invention, the chain is according to claim 8. In this way, the tensions in the linkplates do not increase considerably as the forces between the cams remain lower and this avoids high stresses in the linkplates and the hinge pins.

In an embodiment of the invention, the chain is according to claim 9. In this way, the forces between the cams have a direction that is more perpendicular to the common centreline of the chain. This reduces the force on the cams. In situations where the number of teeth of the sprocket is very low and the preceding linkplate has to lift the following linkplate considerably, the reduced force is an advantage.

In an embodiment of the invention, the chain is according to claim 10. In this way, the sprocket can also have sprocket teeth in addition to the sprocket cavity for transmitting force from the chain to the sprocket.

In an embodiment of the invention, the chain is according to claim 11. In this way, the chain is suitable to support and/or transport objects that exert a force on the crossbeam. An example is a tank track for transporting a vehicle over rough terrain wherein the crossbeam is on the ground. A further example is a transport belt formed by chain links and the crossbeams support the objects on the belt.

In an embodiment of the invention, the chain is according to claim 12. In this way, sprockets can be located on both sides of the chain.

The invention also concerns a chain transmission in accordance with claim 13. Such a chain transmission avoids unnecessary bending of the chain around a too small sprocket and the chain can cooperate with all sprockets in the loop.

In an embodiment of the invention, the chain transmission is according to claim 14. This avoids oscillations in a chain that is too slack.

In an embodiment of the invention, the chain transmission is according to claim 15. This avoids harmful bending of the chain around a too small tensioner.

Hereafter the invention is illustrated with the aid of various embodiments of the invention using drawings, in which
Figure 1 shows a schematic diagram of a path of the hinge centres of a chain moving around a sprocket according to the prior art,
Figure 2 shows a schematic diagram of a path of the hinge centres of a chain with internal guide means moving around a sprocket,
Figure 3 shows a diagram of the relation of the angles with a common centreline of the chain of figure 2 showing the angle of the centreline of a first following linkplate in dependence of the angle of the centreline of a linkplate fully supported on a sprocket,
Figure 4 shows an unsupported linkplate in the straight part of the chain of figure 2 and a polar curve for movement of this linkplate relative to the linkplate that is supported on the sprocket,
Figure 5 shows the linkplate of the chain of figure 2, that is supported on the sprocket and a polar curve for movement of this linkplate relative to the nearest unsupported linkplate in the straight part of the chain,
Figure 6 shows a combination of the figures 3 and 4 and the limitations for designing the internal guide means so that the hinge centres follow the path shown in figure 2,
Figure 7 shows a first embodiment of the linkplates of a part of a chain around a sprocket in subsequent rotative positions of the sprocket wherein the hinge centres follow the path shown in figure 2,
Figure 8 shows a second embodiment of a linkplate for a chain with internal guide means,
Figure 9 shows the path of the hinge centres of a specific chain approaching various sprockets with different numbers of teeth,
Figure 10 shows a third embodiment of a linkplate for a chain with internal guide means,
Figure 11 shows a chain transmission with the linkplates of figure 10,
Figure 12 shows a fourth embodiment of a linkplate for a chain with internal guide means,
Figure 13 shows a fifth embodiment of a linkplate for a chain with internal guide means, and
Figure 14 shows a chain transmission with the linkplates of figure 13.

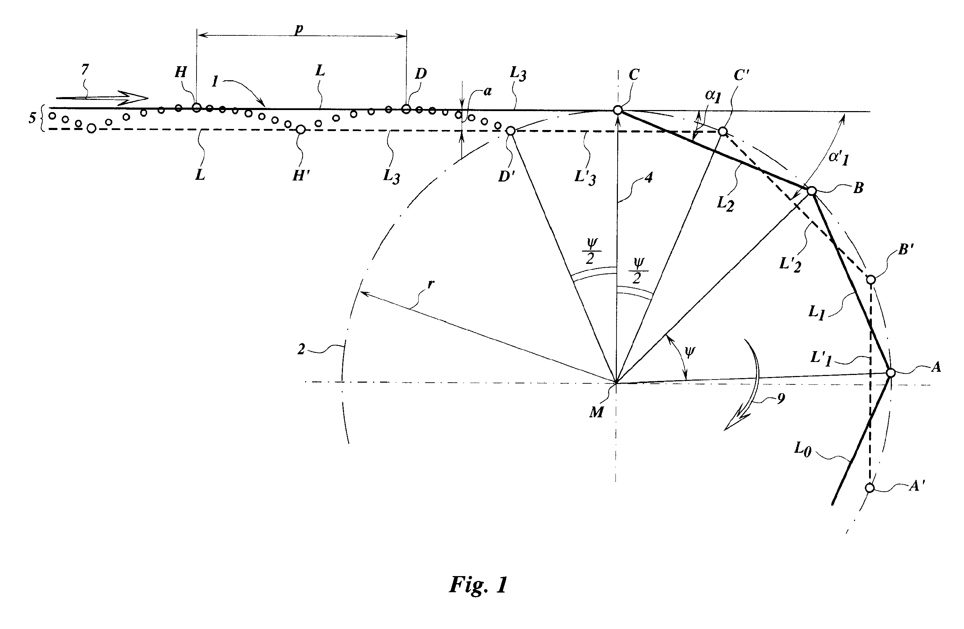

Figure 1 shows a pitch circle 2 of a sprocket. The pitch circle 2 has a pitch circle radius r. A chain 1, in a first position indicated with a continuous line, has linkplates L, L₀, L₁, L₂ and L₃; part of the chain 1 is looped around the sprocket. The chain 1 comprises in longitudinal direction alternating inner linkplates and outer linkplates. Hinges with a hinge centre A, B, C, D or H couple the successive linkplates, the distance between the successive hinge centres is a pitch p. As is well known to the skilled man the pitch p and the number of teeth of the sprocket determine the pitch circle radius r and the number of teeth of the sprocket determines a pitch angle Ψ. The pitch angle Ψ is the angle between two adjacent hinge centres on the pitch circle 2 measured from a centre M of the sprocket.

Around the hinges between the inner linkplates there are rollers or bushes (not shown) that have the hinge centres A, B, C, D, H as rotation axes so that a tooth of the sprocket can fit between the inner linkplates and the rollers or bushes. The teeth of the sprocket can exert via the roller or bush and the hinge a force on the linkplates L, L₀, L₁, L₂ and L₃. The rollers or bushes around the hinges form together with the inner linkplates an inner link; two outer linkplates connect the inner links. Such chains are available in many designs as bush chains or roller chains. In this description, the sprocket is indicated as having teeth that exert a force on the chain. It will be clear that this description of the invention is also applicable for chains that cooperate with sprockets that have cavities or other means to exert forces on the rollers or bushes, or on the linkplates of the chain.

The hinge centres A, B and C are on the pitch circle 2 of a sprocket, which means that linkplates L₀, L₁ and L₂ have a fixed position relative to the sprocket and the sprocket fully supports the linkplates. The chain 1 has a chain load 5 that pulls the chain 1 in a straight line in line with or parallel to a tangent 3 to the pitch circle 2. A radius vector 4 extends from the sprocket centre M perpendicular on the tangent 3. In the first position the hinge centre C is on the pitch circle 2 and on the tangent 3 and the linkplates L₃ and L extend along the tangent 3. The linkplate L₂, that is the last linkplate fully supported on the sprocket, makes an angle α₁, with the common centreline of all linkplates that are not supported on the sprocket.

In figure 1 an interrupted line indicates the chain 1' in a second rotative position of the sprocket after the sprocket rotated over half of the pitch angle Ψ. The hinge centre C moved in a direction 9 along the pitch circle 2 to a position C'. Due to the chain load 5 in line with or parallel to tangent 3, the vertical position of the hinge centres D, H equals the vertical position of C. The line of small circles indicates the path of the unsupported hinge centres D and H during rotation of the sprocket. During this rotation in a direction of rotation 9, the linkplate L₂ rotates with the sprocket to a first angle α'₁ with the common centre-line and the linkplates L₃ remains parallel to the tangent 3 or the common centre-line. At the end of the indicated path of the unsupported hinge centre D nearest to the sprocket, it is on the pitch circle 2 in a position D' and with further rotation of the sprocket the linkplate L₃ rotates with the sprocket. At the moment that the hinge centre D reaches the position D', the bush or the roller of chain 1 collides with the sprocket and its direction of movement changes. At this position, the first angle α'₁ is equal to the pitch angle Ψ.

Further rotation of the sprocket will move the hinge centre D' along the pitch circle 2 of the sprocket. The interrupted line and the full line illustrate the extreme positions of the chain 1 during rotation of the sprocket and indicate the amplitude of the path of the hinge centres. The linkplate L'₃ now has a fixed position relative to the sprocket and is fully supported on the sprocket and its centreline starts making a first angle α₁ with the tangent 3 and the first angle α₁ increases from 0 to the pitch angle Ψ.

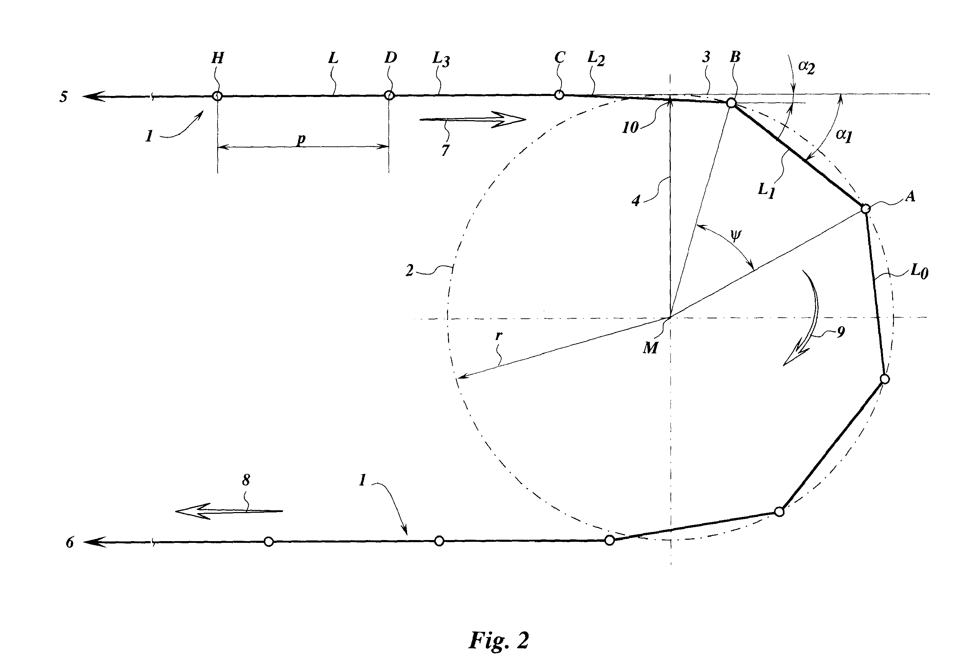

Figure 2 shows a first embodiment of a chain 1 with internal guide means. The linkplate L₁ has both hinge centres A and B fully supported on the sprocket. The internal guide means, which are elucidated hereafter, force the linkplate L₁, when it rotates with the sprocket and makes a first angle α₁ relative a common centreline of all following unsupported linkplates, to rotate the linkplate L₂. The linkplate L₂ rotates around the hinge centre B that is supported on the sprocket and has a second angle α₂ relative to the common centreline. The forced rotation of linkplate L₂ is designed such that during rotation of the sprocket in the direction of rotation 9 the hinge centre C and with that all following hinge centres D, H, are forced to follow the tangent 3. At the location where the tangent 3 meets the pitch circle 2 in a point of contact at the end of a radius vector 4, these hinge centres C, D, H will start to move along the pitch circle 2. This means that the bush or roller around the hinge centres C, D, H do not collide onto the sprocket but the internal guide means guide the hinge centres C, D, H towards and on the pitch circle 2 of the sprocket.

The internal guide means acts between linkplates that are in the same plane. This means that the internal guide means acts either between inner linkplates or between outer linkplates. In the shown embodiment, the internal guide means acts between the linkplate L₁ that has a fixed position relative to the sprocket, and the linkplate L₃ that has no fixed position relative to the sprocket. The linkplate L₂ couples the linkplate L₁ and linkplate L₃ with hinges that have hinge centres B and C respectively. The hinge centre B of linkplate L₂ is on the pitch circle 2 of the sprocket and its hinge centre C is free to move in an arc in respect to the hinge centre B on the sprocket so that linkplate L₂ has one degree of freedom. The centre line of the linkplate L₁ makes a first angle α₁ with the common centreline of all following unsupported linkplates and the centre line of linkplate L₂ makes a second angle α₂ with the common centre-line of all following unsupported linkplates. The internal guide means between linkplate L₁ and L₃ determines the second angle α₂ in dependence of the first angle α₁. In this way the internal guide means between linkplate L₁ and linkplate L₃ determines the position of the hinge centre C and with that also the path of the hinge centres D, H prior to reaching pitch circle 2 during rotation of the sprocket. When comparing figure 1 and figure 2, it will be clear that in the prior art the linkplate L₃ with only the hinge centre C supported on the sprocket, remains parallel to the common centreline and according to the invention the similar supported linkplate L₂ starts making a second angle α₂ with the common centreline.

When the first angle α₁ is equal to 0.5 times the pitch angle Ψ, which is the first rotative position where the linkplate L₁ is fully supported on the sprocket, the second angle α₂ will be approximately zero, as the chain load 5 pulls the linkplate L₂ in the direction of the tangent 3. When the first angle α₁ increases from 0.5 times the pitch angle Ψ to 1.5 times the pitch angle Ψ, the internal guide means force the second angle α₂ to increase from zero to approximately 0.5 times the pitch angle Ψ. When the first angle α₁ is equal to the pitch angle Ψ the second angle α₂ has increased. In the shown embodiment the angle increased to at least 0.1 times the pitch angle Ψ. In an ideal situation where the hinge and internal guide means have no play the unsupported hinge centres move along the tangent 3 and accurately follow the tangent 3 until they reach the pitch circle 2, the linkplate L₁ will have forced the second angle α₂ to increase to 0.125 times the pitch angle Ψ.

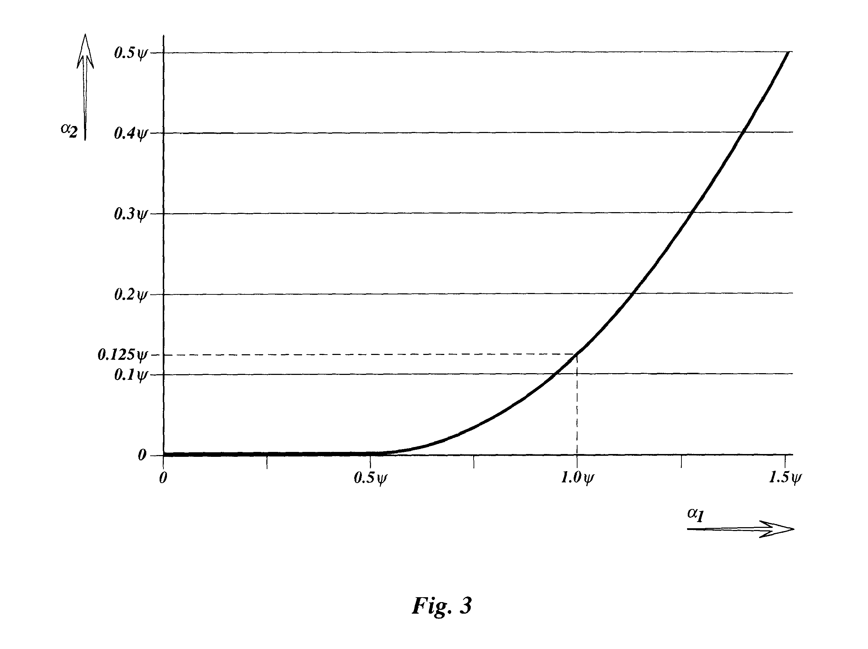

It will be clear that the rotation of linkplate L₂ influences a third angle (not shown) of the linkplate L₃ with the common centreline after the value of the second angle α₂ increases above 0.5 times the pitch angle Ψ. Figure 3 shows how the value of the first angle α₁ determines the value of the second angle α₂ for the situation shown in figure 2. Mathematically, it can be determined that the second angle α₂ is the arcsine of the quotient of the square of sine of 0.5 times the first angle α₁ minus 0.25 times the pitch angle Ψ and the sine of 0.5 times the pitch angle Ψ, or α₂=arcsine{sine²(α₁/2-Ψ/4)/sine(Ψ/2)}.

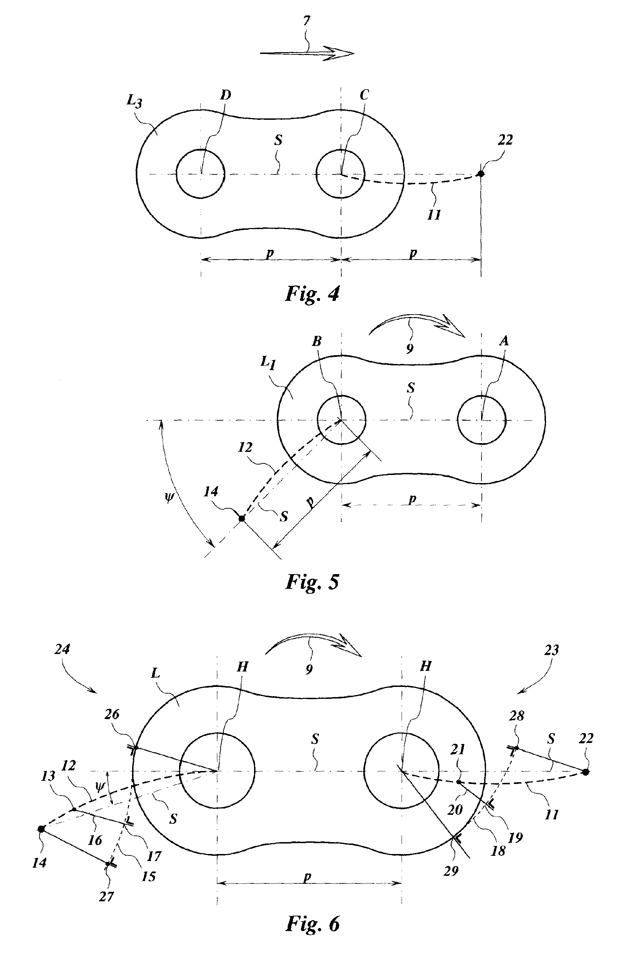

The internal guide means between the linkplate L₁ and the linkplate L₃ forces the rotative movements of these linkplates in regard of each other and/or in regard of linkplate L₂. As these movements must be repeated for each following linkplate there must be internal guide means between all successive linkplates and all successive linkplates will have the same shape. Each linkplate L, L₁, L₂, L₃ has at a front side 23 a front cam 18; the front cam 18 is on the most forward side of the linkplate seen in the direction of movement 7 of the chain. Also each linkplate L, L₁, L₂, L₃ has at a rear side 24 a rear cam 15 (see figure 6).

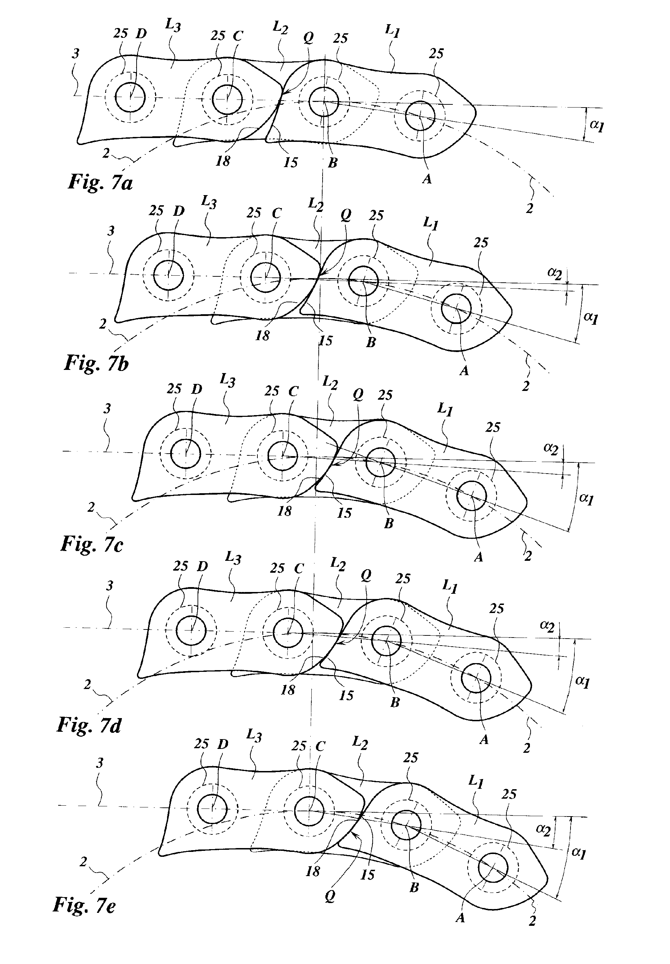

The interactions of the front cam 18 at the front of the linkplate L₃ and the rear cam 15 at the rear of the linkplate L₁ form the internal guide means. The linkplate L₃ with the front cam 18 and the linkplate L₁ with the rear cam 15 are in the same plane at one side of the linkplate L₂ so that they can interact on each other. The rear cam 15 forces the rotation of the linkplate L₂ by having the front cam 18 pressing in a contact point Q (see figure 7) against the rear cam 15. This contact point Q changes for each first angle α₁, exerts a force on the front cam 18 and forces linkplate L₂ to rotate and determines the second angle α₂.

For designing the internal guide means that acts between linkplate L₁ and linkplate L₃ and that makes following the path of the hinge centres as shown in figure 2 possible, first the relative movements of the linkplate L₁ and linkplate L₃ are determined. In figure 2, an instantaneous pole 10 on the radius vector 4 indicates the point where linkplate L₁, which is on the sprocket and which rotates around the sprocket centre M in a rotation direction 9, has a zero velocity relative to linkplate L₃ that moves in a direction 7. This instantaneous pole 10 has different positions for the different rotative positions of the sprocket, which means for the different values of the first angle α₁.

A polar curve 11 shown in figure 4 is a curve showing all instantaneous poles 10, which means for all values of the first angle α₁, relative to linkplate L₁ seen from linkplate L₃. The polar curve 11 is between forward hinge centre C of linkplate L₃ and a position 22 where the instantaneous pole 10 is at the rotative position of the sprocket whereon linkplate L₁ starts supporting linkplate L₃ and the first angle α₁ is 0.5 times the pitch angle Ψ. A polar curve 12 shown in figure 5 is a curve showing all instantaneous poles 10 relative to linkplate L₃ seen from linkplate L₁. The polar curve 12 is between rear hinge centre B of linkplate L₁ and a position 14 where the instantaneous pole 10 is at the rotative position of the sprocket whereon linkplate L₁ ends supporting linkplate L₃ and the sprocket fully supports the linkplate L₃.

Figure 6 shows the polar curve 11 at the linkplate front side 23 and polar curve 12 at the linkplate rear side 24 of a linkplate L respectively. Polar curve 11 determines the shape of the front cam 18 and polar curve 12 determines the shape of the rear cam 15. The front cam 18 is designed such, that in each point 19 on the front cam 18 there is perpendicular 20 on the front cam 18 that intersects the polar curve 11 in an instantaneous pole 21. Position 22, and the front hinge centre H determine the start 28 and finish 29 of the active part of the front cam 18. For the rear cam 15 for each point 17 on the rear cam 15 there is a perpendicular 16 on the rear cam 15 that intersects in the polar curve 12 in an instantaneous pole 13. The rear hinge centre H and position 14 determine the start 26 and finish 27 of the active part of the rear cam 15. For each position on the polar curve 11, there is corresponding position on the polar curve 12. In this way by choosing one of the cams 15, 18 the other cam can be determined. This determining of the one cam using the shape of the other is done mathematically in the way described above or it can be done by generating the one cam numerically or graphically from the other.

Figure 7 shows the linkplates L₁, L₂ and L₃ of a first embodiment as they start rotating around a sprocket with a pitch circle 2 that has a radius r. The linkplates are designed for cooperating with the sprocket that has 20 teeth. In figure 7a the hinge centres A and B of linkplate L₁ are on the pitch circle 2 so that a tooth space of the sprocket positions rollers or bushes 25 of the chain that are indicated by circular interrupted lines. The hinge centres C and D of linkplate L₃ are on the tangent 3. The linkplate L₂ has the hinge centres B and C that are on the tangent 3 and the hinge centre B is also on the pitch circle 2 at the end of the radius vector 4 (not shown). As the hinge centres B and C are on the tangent 3, the linkplate L₂ and linkplate L₃ have a common centre line, which is the centreline of all linkplates that approach the sprocket. The centre lines s of linkplate L₂, which has the same direction as the common centreline, and linkplate L₁ make a first angle α₁ that is equal to 0.5 times the pitch angle Ψ. The front cam 18 of linkplate L₃ touches the rear cam 15 of linkplate L₁ in contact point Q.

Figure 7b shows the situation after the sprocket has rotated further and the first angle α₁ with the common centreline is approximately 0.75 times the pitch angle Ψ and wherein the hinge centre B is no longer on the tangent 3. The linkplate L₂ makes a second angle α₂ with the common centreline. The contact point Q has shifted along the rear cam 15 and the front cam 18 and the interaction between the rear cam 15 and the front cam 18 lifts the hinge centre C so that the hinge centre C remains on the tangent 3 and is no longer on the same level as the hinge centre B.

Figure 7c shows the situation where the sprocket has rotated further and the first angle α₁ with the common centreline is approximately 1.0 times the pitch angle Ψ. Figure 7d shows the situation where the sprocket has rotated further and the first angle α₁ with the common centreline is approximately 1.25 times the pitch angle Ψ. Figure 7e shows the situation where the sprocket has rotated further and is the first angle α₁ with the common centreline is approximately 1.5 times the pitch angle Ψ. In figure 7e the linkplate L₂ is in the same position as the linkplate L₁ in figure 7a, and the centreline of the linkplate L₂ makes the second angle α₂ with the common centreline, which second angle α₂ is equal to 0.5 times the pitch angle ψ. In the successive figures, the hinge centre C moves along tangent 3 as the front cam 18 of linkplate L₃ is supported by the rear cam 15 of linkplate L₁ until the ring or bush 25 surrounding hinge centre C is supported by the sprocket as shown in figure 7e. After further rotation, the sprocket fully supports the linkplate L₂ and the same sequence repeats for the next hinge centre D.

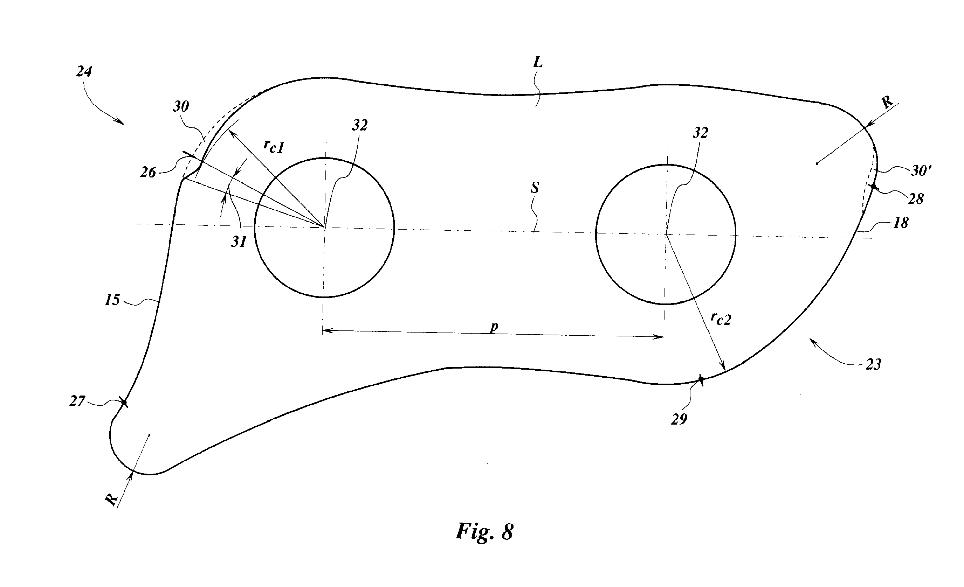

Figure 8 shows a second embodiment with an adapted linkplate L that is similar to linkplates of figure 7. Figure 8 also illustrates the active part of the front cam 18 limited by the start 28 and the finish 29. The active part of the rear cam 15 shows the start 26 and the finish 27. The linkplate L comprises two hinge centres 32 at the pitch distance p. A line s indicates the longitudinal axis of the linkplate L. Immediately adjacent to the start 26 of the rear cam 15 the rear cam 15 has a circular section 31 around the rear hinge centre with an arc of 0.5 times the pitch angle Ψ.

During use, when the in-line part of the chain is under tension 5, the hinge centres 32 of the successive linkplates L are on the common centreline, which line includes all longitudinal axes s of the linkplates L. Theoretically, the rear cam 15 and the front cam 18 of successive links have a touching but force free contact at the start points 26, 28 of the cams 15, 18. In practice, there are machining tolerances during production and there might be negative play between successive linkplates. The negative play causes large forces in the chain between the cams 15 and 18 and as a consequence thereof also in the bearings of the hinges in the chain and this leads to undesirable stress. In order to avoid unpredictable stresses in the chain, there is a recess 30, 30' in one or in both the cams 15, 18. In the shown embodiment, an uninterrupted line in the rear cam 15 shows the recess 30 and an interrupted line in the front cam 18 shows the recess 30'. The recesses 30 or 30' can be in one or in both cams 15, 18. This small recess 30, 30' adds additional play in the situation where the link axes s form the common line. As soon as the linkplates L are no longer in line the front cam 18 touches the rear cam 15 as described earlier.

The linkplate L shown in figure 8 is from material that extends at least a distance r_{c1} or r_{c2} from the hinge centre 32. This distance r_{c1} or r_{c2} is a measure for the strength of the linkplate L, as it determines the smallest load-bearing section of the linkplate L. The front cam 18 has a convex surface directed towards the sprocket around which it can be looped. Preferably, fillets R that have a minimum radius of approximately 0.3 mm, round off the circumference of the linkplate L where necessary, so that the linkplate L can be stamped from plate material using stamping dies that have acceptable wear resistance.

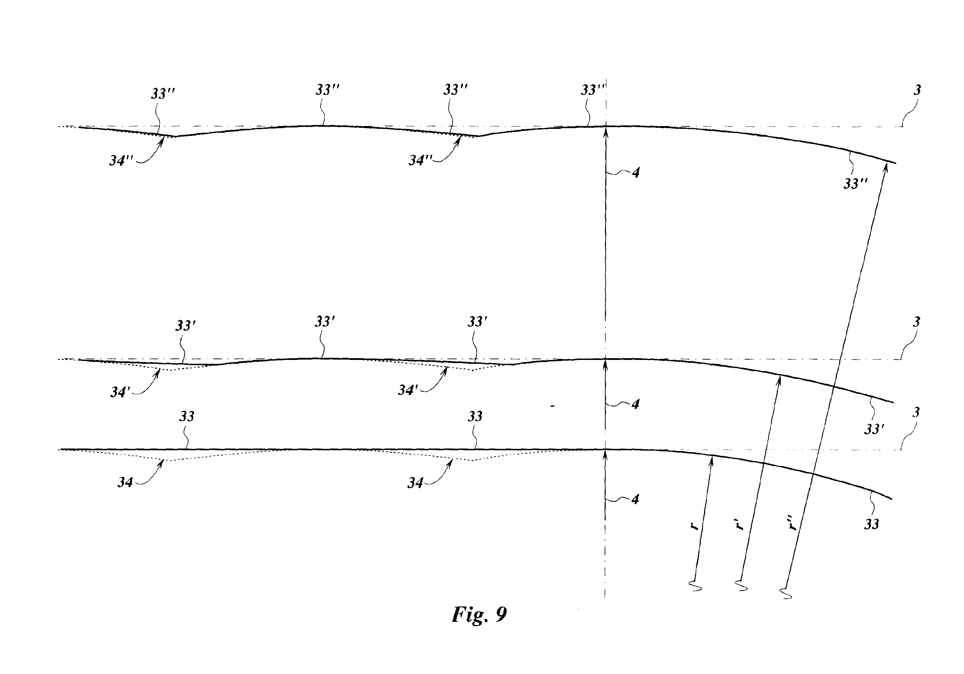

In figure 9, line 33, which is the lowest line, shows the path of the hinge centres 32 of the chain with internal guide means. The hinge centres 32 approach the sprocket along the common centreline which in this case is the same as the tangent 3 and reach the pitch circle at the location of the radius vector 4. After the hinge centres 32 have passed the radius vector 4, they follow the pitch circle with the radius r of the sprocket as the sprocket rotates around its sprocket centre M. The sprocket has a specific number of teeth, in the shown embodiment the number of teeth z=18, and the chain is designed for this number of teeth z. The interrupted line 34 indicates the path that the hinge centres 32 would have taken if the chain would have no internal guide means, as is the case in traditional bush or roller chains.

In figure 9, line 33', which is the middle line, shows the path of the hinge centres 32 of the same chain as above with the internal guide means suitable for a sprocket with the specific number of teeth z=18. The chain is looped around a sprocket of which the number of teeth is slightly more, the number of teeth of the sprocket is z=20. The hinge centres 32 follow a path that follows the pitch circle with a radius r' before the hinge centre 32 has passed the radius vector 4. Due to the increased number of teeth, the radius r' is larger than the radius r. Before the hitch centres 32 reach the pitch circle, the hitch centres 32 follow a straight path that deviates slightly from the tangent 3. The interrupted line 34' indicates the path that the hinge centres 32 would have taken if the chain would have no internal guide means. This path is an arc with a radius r' that is equal to the pitch circle and the arc is tangent to the tangent 3. The figure shows that the internal guide means supports the hinge centres 32 before they reach the pitch circle and lifts the hinge centres 32 above the path that the hinge centres 32 would have taken if there is no internal guide means. The internal guide means lifts the unsupported hinge centre 32 as it approaches but before it reaches the sprocket. This shows that the hinge centres 32 do not impact on the sprocket, but are guided by the internal guide means towards the sprocket.

In figure 9, line 33", which is the top line, shows the path of the hinge centres 32 of the same chain as above with the internal guide means that are suitable for a sprocket with the specific number of teeth z=18. The chain is looped around a sprocket of which the number of teeth is considerably more as the number of teeth of the sprocket is z=25. The hinge centres 32 follow a path that follows the pitch circle with a radius r" before the hinge centre 32 has passed the radius vector 4. Due to the high number of teeth, the radius r" is larger than the radii r and r'. Before the hitch centres 32 reach the pitch circle, the hitch centres 32 follow an arc with a radius r" that is tangent to the tangent 3 and that changes near its lowest point in the straight line. The interrupted line 34" indicates the path that the hinge centres 32 would have taken if the chain would have no internal guide means. The figure shows that also for this sprocket the internal guide means supports the hinge centres 32 for a short distance before they reach the pitch circle and lifts the hinge centres 32 above the path that the hinge centres 32 would have taken if there were no internal guide means. The internal guide means lifts the unsupported hinge centre 32 as it approaches but before it reaches the sprocket. This shows that the hinge centres 32 do not impact on the sprocket, but are guided by the internal guide means towards the sprocket.

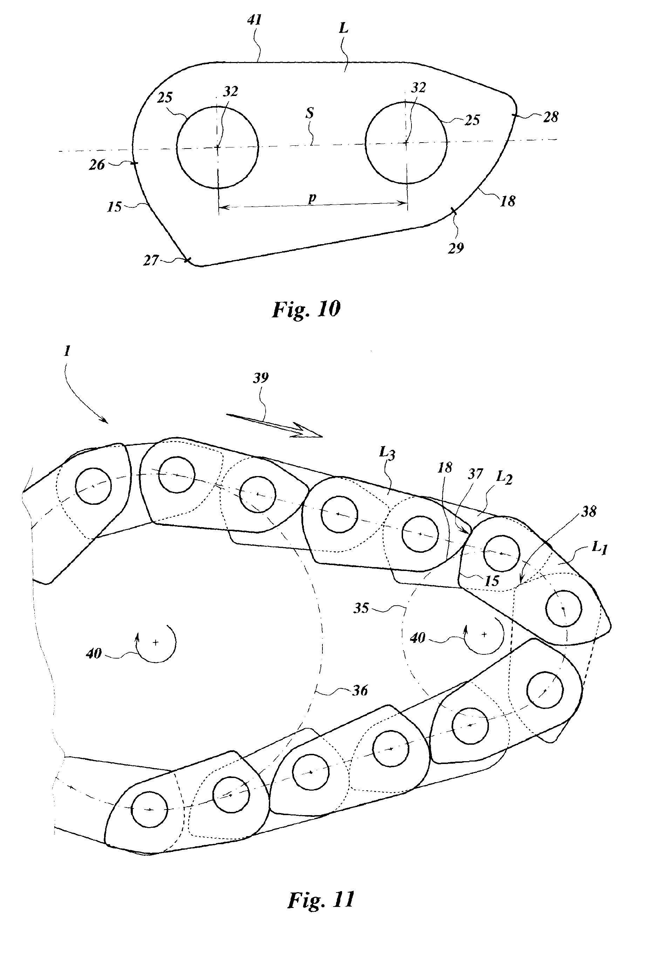

Figure 10 shows a fourth embodiment of a linkplate L. The linkplate L is suitable for a sprocket with 6 teeth, such a sprocket is suitable for use in chain transmission with a high transmission ratio. The front cam 18 has a convex surface directed towards the sprocket around which it can be looped. One of the longitudinal sides of the linkplate L is a straight line 41 that is parallel to the link centreline s. During production of the linkplates L, the straight line 41 is used for dimensional control.

Figure 11 shows a chain transmission with a small sprocket with a pitch circle 35 and a larger sprocket with a pitch circle 36. The small sprocket has six teeth and the larger sprocket has twelve teeth. The chain 1 looped around both sprockets has linkplates L that are similar to the linkplate L of figure 10. The chain moves in a direction 39 and the sprockets rotate in a direction 40. The figure shows that the second following linkplate L₃ that approaches the fully supported linkplate L₁ on the smaller sprocket have a first contact 37. During further rotation of the smaller sprocket, the rear cam 15 of the fully supported linkplate L₁ and the front cam 18 of the second following linkplate L₃ roll and slide along each other until the final contact 38. This means that the second following linkplate L₃ follows a controlled path along a straight line towards the smaller sprocket.

In the chain transmission of figure 11, moving one of the sprockets tensions the chain 1. If a chain tensioner is used, the chain must be bended to a radius that is larger than the radius of the smallest sprocket, or in any case larger than the radius for which the chain is designed. Also, the chain must be bended from inside to the outside of the loop. If done otherwise, the cams will prevent bending of the chain and high tensions in the hinges and cam surfaces will occur.

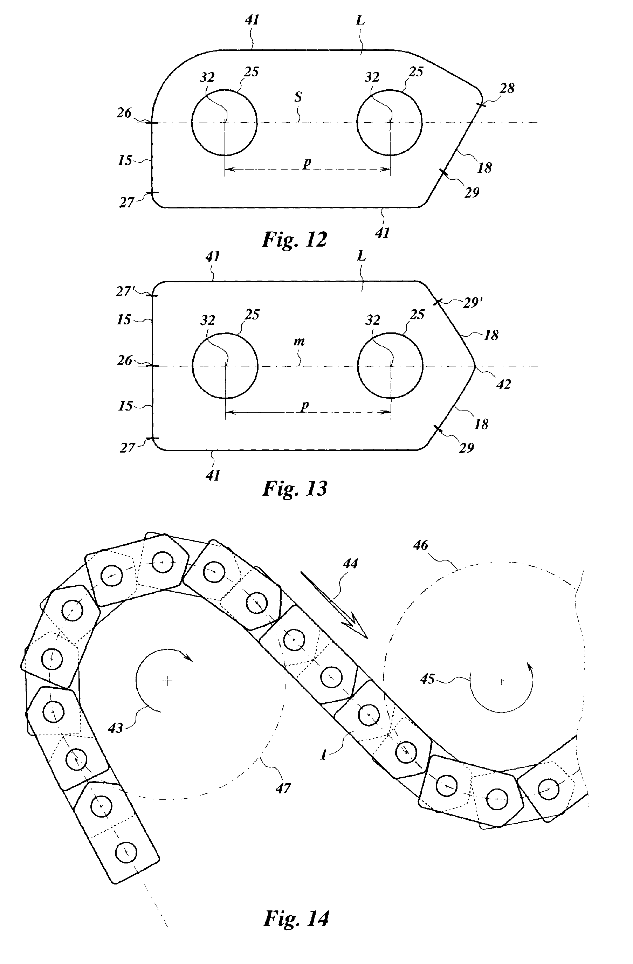

Figure 12 shows a fourth embodiment of linkplate L. The linkplate L is suitable for a sprocket with fourteen teeth. In this embodiment, the rear cam 15 is a straight line that is perpendicular to the centreline s of the linkplate L. The start 26 of the rear cam 15 is on the centreline s. One or both longitudinal sides form straight sides 41. In this way, the production and dimensional control of the linkplate L is easy.

Figure 13 shows a fifth embodiment of linkplate L. this linkplate has the bottom side of the linkplate L of figure 12, and the bottom side of this linkplate is mirrored to the upper side, whereby the link centreline s forms the line of symmetry m. As the front cam 18 extended above the centreline s, part of the front cam 18 is lost. On the centreline m, s in the front cam 18 a fillet 42 is added to prevent sharp corners in the cam 18. The loss of part of the front cam leads to a small but acceptable deviation in the straight path of the hinge centres 32, when they approach the sprockets. The advantage of this embodiment is that the chain now can bend around sprockets on both sides of the chain. Figure 14 shows the chain 1 around the first sprocket 47 with the direction of rotation 43 and the second sprocket 46 with a counter rotation 45. The sprockets 46 and 47 are on opposite sides of the chain 1 that moves in a direction 44.

## Claims

1. Chain designed for meshing with a chain sprocket having a sprocket centre (M), a pitch angle (Ψ), a pitch circle (2) and a specific number of teeth, the chain (1) comprising linkplates (L,L₀,L₁,L₂,L₃) having two hinge pins for coupling to following or preceeding inner linkplates or outer linkplates, the hinge pins forming hinge rotation axes (A,B,C,D,H;32) that are on a centreline (s) at a pitch (p) distance so that the successive linkplates can rotate around successive hinge rotation axes, wherein when the centre lines of successive linkplates form a common centreline, the most forward linkplate (L₁) makes when it rotates a first angle (α₁) with the common centreline and a first following linkplate (L₂) makes when it rotates a second angle (α₂) with the common centreline **characterized in that** each linkplate (L,L₀,L₁,L₂,L₃) has a front cam (18) and a rear cam (15) and when the first angle (α₁) increases by rotating the most forward linkplate (L₁), the rear cam of the most forward linkplate and the front cam of a second following linkplate (L₃) start to interact before the first angle (α₁) increases to the pitch angle (ψ) and this interaction forces the second angle (α₂) to increase above 0.

2. Chain in accordance with claim 1 wherein when the first angle (α₁) increases by rotating the most forward linkplate (L₁), the rear cam (15) of the most forward linkplate and the front cam (18) of a second following linkplate (L₃) start to interact before the first angle (α₁) increases to 0.8 times the pitch angle (Ψ) and this interaction forces the second angle (α₂) to increase above 0.

3. Chain in accordance with claim 1 or 2 wherein when the first angle (α₁) increases by rotating the most forward linkplate (L₁), the rear cam (15) of the most forward linkplate and the front cam (18) of a second following linkplate (L₃) start to interact and this interaction forces the first following linkplate (L₂) to rotate so that the second angle (α₂) is at least 0.1 times the pitch angle (Ψ) when the first angle is equal to the pitch angle.

4. Chain in accordance with claim 1, 2 or 3 wherein when the first angle (α₁) increases by rotating the most forward linkplate (L₁), the rear cam (15) of the most forward linkplate and the front cam (18) of a second following linkplate (L₃) start to interact and this interaction forces the first following linkplate (L₂) to rotate so that the second angle (α₂) increases in dependence of the first angle, and preferably the second angle is the arcsine of the quotient of the square of sine of 0.5 times the first angle minus 0.25 times the pitch angle and the sine of 0.5 times the pitch angle (α₂=arcsine{sine²(α₁/2-Ψ/4) /sine (Ψ/2)})

5. Chain in accordance with one of the preceeding claims wherein the active part of the front cam (18) is convex at the side directed towards the sprocket.

6. Chain in accordance with one of the preceeding claims wherein the active part of at least one of the cams (15,18) is straight, and preferably perpendicular to a centreline (s) of the linkplate.

7. Chain in accordance with one of the preceeding claims wherein the front cam (18) and/or the rear cam (18) has/have a correction such as a recess (30,30') to increase the play between the front cam and the rear cam in adjoining linkplates (L,L₃) of which the centre lines (s) are in line.

8. Chain in accordance with one of the preceding claims wherein a strength radius (r_{c1}, r_{c2}) is the smallest distance from a circumference of a linkplate (L) to a hinge rotation axis (32) and the pitch (p) is more than 2.2 times the strength radius.

9. Chain in accordance with one of the preceding claims wherein a strength radius (r_{c1}, r_{c2}) is the smallest distance from a circumference of a linkplate (L) to a hinge rotation axis (32) and the pitch (p) is more than 2.5 times the strength radius.

10. Chain in accordance with one of the preceding claims wherein around each hinge pin between two inner linkplates there is a roller or a bush(25).

11. Chain in accordance with one of the claims 1 to 9 wherein a crossbeam connects alternate side by side linkplates in the transversal direction.

12. Chain in accordance with one of the preceding claims wherein the front cam and the rear cam are symmetric relative to the centreline (m,s).

13. Chain transmission comprising the chain in accordance with one of the claims 1 to 11 wherein the chain (1) forms a loop around two or more sprockets (35, 36) and all sprockets have at least the specific number of teeth.

14. Chain transmission in accordance with claim 13 wherein a resiliently mounted stationary or rotating tensioner is located inside the loop to tension the chain (1).

15. Chain transmission comprising the chain in accordance with one of the claims 1 to 12 wherein a resiliently mounted stationary or rotating tensioner tensions the chain (1) and the tensioner is shaped such that it gives the chain a radius that is equal to or larger than the radius of the chain around a sprocket that has the specific number of teeth.
